# EUROPÄISCHE PATENTSCHRIFT

(11) **EP 1 163 108 B1**
(45) Veröffentlichungstag und Bekanntmachung des Hinweises auf die Patenterteilung: **23.07.2003**
(21) Anmeldenummer: 00914136.7
(22) Anmeldetag: 15.03.2000
(51) Int. Cl.: B29D 23/20, B29C 31/00, B65D 35/22

(54) **VERFAHREN UND VORRICHTUNG ZUR HERSTELLUNG EINER ZWEIKAMMERTUBE**
METHOD AND DEVICE FOR PRODUCING A TWO-CHAMBER TUBE
PROCEDE ET DISPOSITIF DESTINES A LA PRODUCTION D'UN TUBE A DEUX CHAMBRES

(30) Priorität: 16.03.1999 DE 19911729
(43) Veröffentlichungstag der Anmeldung: 19.12.2001
(73) Patentinhaber: AISA AUTOMATION INDUSTRIELLE SA, 1896 Vouvry (CH)
(72) Erfinder: KELLER, Gerhard, CH-1805 Jongny (CH); VOIGTMANN, Jean-Pierre, CH-1820 Martigny (CH)
(74) Vertreter: Patentanwälte Zellentin & Partner
(86) Internationale Anmeldenummer: EP0002291
(87) Internationale Veröffentlichungsnummer: WO00054963

(56) Entgegenhaltungen:
- DE-C- 19 640 833
- DE-C- 19 712 736
- US-A- 5 102 016

## Beschreibung

Die Erfindung betrifft ein Verfahren zur Herstellung einer Zweikammertube sowie eine Vorrichtung zur Durchführung des Verfahrens.

Derartige Verfahren und derartige Vorrichtungen sind beispielsweise aus der DE-C1-196 40 833 und aus der DE-C1-197 12 736 bekannt.

Bei dem aus der DE 197 12 736 bekannten Verfahren unter Verwendung der dort beschriebenen Vorrichtung muß eine Trennwand in einen engen scharfkantigen Schlitz in einem einteiligen Dorn eingeführt werden, was insbesondere bei dünnwandigen Trennwänden zu erheblichen Problemen führen kann. Auch die Leistungsfähigkeit der Vorrichtung ist stark eingeschränkt, da sowohl die Herstellung eines Tubenrohrkörpers mit Trennwand als auch die Anformung eines Tubenkopfes, der Kühlzeiten erfordert, in der gleichen Vorrichtung erfolgt, wobei jeweils unterschiedlich lange auf den einzuhaltenden Takt sich auswirkende Zeiten erforderlich sind.

Bei dem aus der DE 196 40 833 bekannten Verfahren und der dazugehörigen Vorrichtung wird ein zweigeteilter Preßdom verwendet, deren Teile relativ zueinander verschiebbar sind, wodurch das Einführen eines mit einer Trennwand versehenen Rohrkörpers erleichtert wird.

Aufgabe der Erfindung ist es, ein Verfahren und eine Vorrichtung zur Herstellung von Zweikammertuben anzugeben, das eine hohe Geschwindigkeit und eine sichere einfache Zuführung von Trennwänden zur Herstellung von vorgefertigten mit einer Trennwand versehenen Rohrkörpern in Form von Rohlingen und deren Überführung auf einen Preßdorn und in eine Matrize zum Anformen eines Tubenkopfes ermöglicht.

Diese Aufgabe wird durch ein Verfahren mit den Merkmalen des Anspruchs 1 und durch eine Vorrichtung mit den Merkmalen des Anspruchs 5 gelöst.

Vorteilhafte Ausgestaltungen der Erfindung sind den zugeordneten Unteransprüchen zu entnehmen.

Nachstehend wird die Erfindung anhand einer Vorrichtung zur Durchführung des Verfahrens näher erläutert. Es zeigt:
- Fig. 1: eine Vorrichtung zur Herstellung von Zweikammertuben in Draufsicht;
- Fig. 2: die Vorrichtung gemäß Fig. 1 in Seitenansicht;
- Fig. 3: Stadien des Übergangs eines vorgefertigten Rohlings von einem Hilfsdorn auf einen Preßdom.

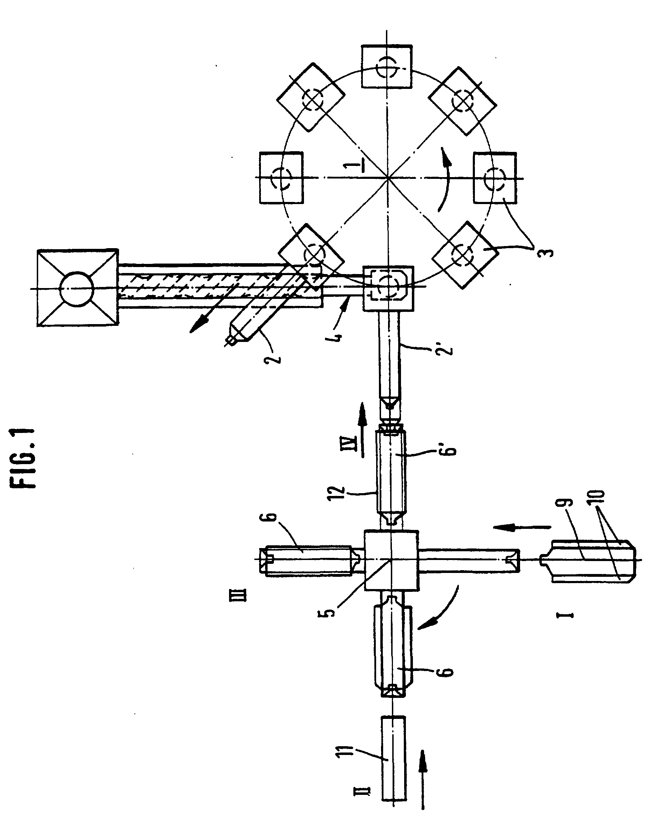

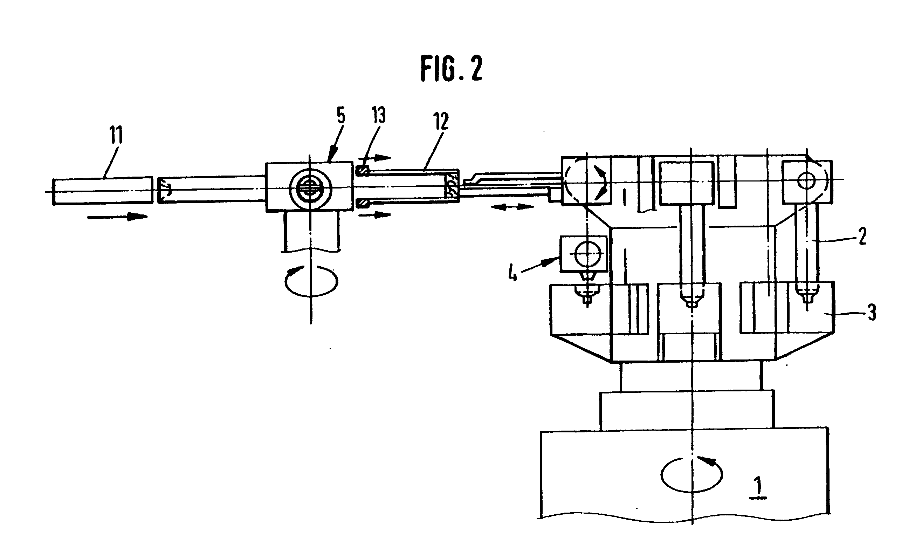

Die in den Fig. 1 und 2 dargestellte Vorrichtung enthält einen taktweise angetriebenen Drehtisch 1 mit am Umfang verteilt angeordneten verschwenkbaren Preßdomen 2, wie er beispielsweise in der DE-AS 28 42 515 beschrieben ist. Jeder Preßdorn 2 ist in eine waagerechte und eine senkrechte Stellung verschwenkbar angeordnet. Jedem Preßdorn 2 ist in seiner senkrechten Stellung eine axial fluchtende Matrize 3 am Drehtisch 1 zugeordnet, wobei Preßdom 2 und Matrize 3 in ihrer axialen Ausrichtung zur Ausführung eines Preßvorgangs relativ gegeneinander bewegbar angeordnet sind. Einer Matrize 3 des Drehtisches 1 ist, vorzugsweise in einer Position, wo der entsprechende Preßdom 2 waagerecht geführt wird, eine Zuführstation 4 zur Abgabe einer Portion eines geschmolzenen Kunststoffs in die Matrize 3 zugeordnet. Die Zuführstation kann einen Extruder und einen Dosierer umfassen.

In axialer Richtung zu einem sich in waagerechter Position befindlichen Preßdorn 2' ist eine Nabe 5 schrittweise drehbar angeordnet. Die Nabe 5 trägt Hilfsdome 6, die, vorzugsweise aber nicht zwingend, jeweils aus zwei Hilfsdomteilen 7, 7' bestehen und einen Spalt 8 aufweisen, in den eine Trennwand 9 als Zuschnitt einführbar ist. Im Ausführungsbeispiel sind vier gleichmäßig am Umfang der Nabe 5 verteilte Hilfsdorne 6 in waagerechter und axialer Ausrichtung senkrecht zur Drehachse der Nabe 5 angeordnet. Jeder Hilfsdorn 6 ist bei seinem Weg um die Nabe 5 axial fluchtend in einer Position einem Preßdorn 2 des Drehtisches 1 zugeordnet, wobei in dieser Position die jeweiligen freien Enden von Hilfsdorn 6 und Preßdom 2' nur gering voneinander beabstandet sind.

Gemäß Fig. 1 wird an der Station I einem Hilfsdorn 6 eine Trennwand 9 zugeführt, die seitliche Flügel 10 aufweist, die beidseitig aus dem Hilfsdorn 6 herausragen und an die Wandung des Hilfsdorns 6 bzw. in eventuell vorgesehene, den Flügeln 10 entsprechenden, Aussparungen angeformt werden. Dem Hilfsdorn 6 mit der eingeführten Trennwand 9 und den angeformten Flügeln 10 wird an der nächsten Station II ein vorgefertigter Rohrkörper 11 zugeführt und axial aufgeschoben.

Es ist auch möglich um den Hilfsdorn 6 einen Zuschnitt für einen Rohrkörper zu wickeln und eine überlappende Kante zu verbinden z. B. zu verschweißen oder auch die Seitenkanten mit einem Siegelband z. B. zu verkleben.

An der nachfolgenden Station III können erforderlichenfalls die Flügel 10 im Rohrkörper dicht befestigt werden, z. B. durch Verschweißen mit Hochfrequenz (die Hilfsdorne weisen dann an den entsprechenden Stellen Metallteile zur Erzeugung der Verschweißwärme auf). Das Verschweißen kann je nach Wunsch über die gesamte Kontaktlänge zwischen Rohrkörper 11 und Trennwand 9 bzw. Trennwandflügeln 10 erfolgen.

In der letzten Station IV erfolgt dann die Übergabe des in Station III hergestellten Rohlings 12 aus Rohrkörper 11 mit Trennwand 9 auf den jeweils dieser Station in axialer Position zugeordneten leeren Preßdom 2 des Drehtisches 1. Um die Übergabe zu gewährleisten sind den Hilfsdornen 6 - mindestens in Station IV - rückziehbare Aufschiebvorrichtungen 13 (in Fig. 2 schematisch angedeutet) zugeordnet. Die Aufschiebvorrichtung 13 hat die Aufgabe, den Rohling 11 vom Hilfsdorn 6 auf den Preßdorn 2 zu übergeben (aufzuschieben), wobei diese auch jedem Hilfsdorn 6 zugeordnet sein kann.

Vorzugsweise sind auch die Preßdorne 2 - wie in der DE 196 40 833 beschrieben, auf die auch, um Wiederholungen zu vermeiden, ausdrücklich Bezug genommen wird, zweiteilig mit einem Trennspalt 14 zwischen ihnen hergestellt, wobei die beiden Dornteile 2a, b relativ gegeneinander längsverschiebbar sind.

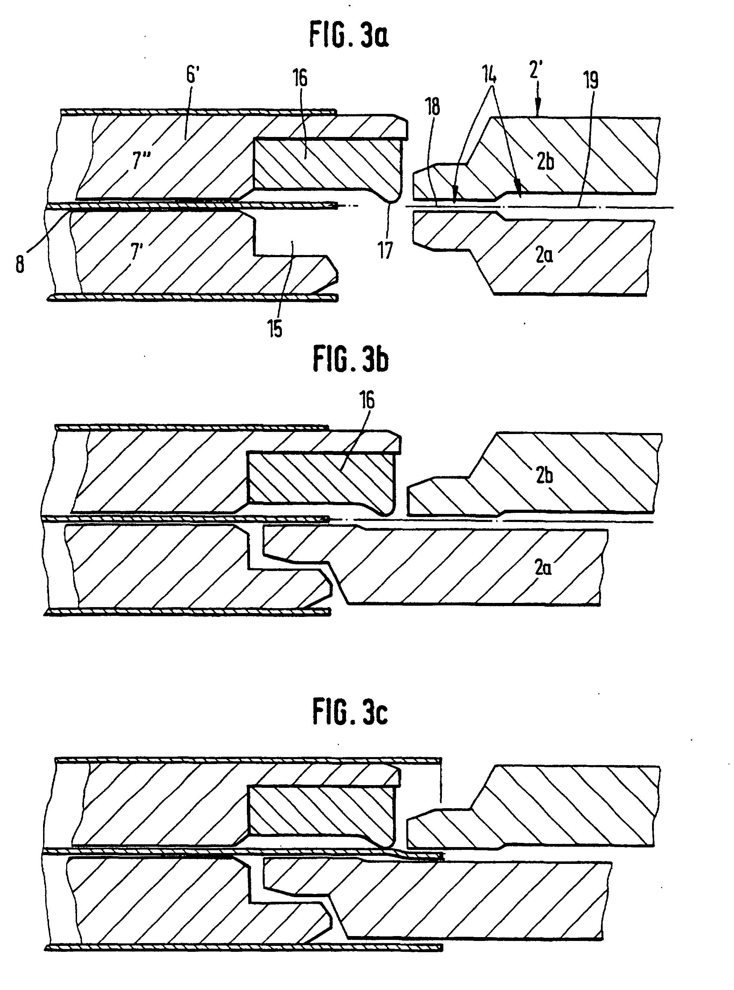

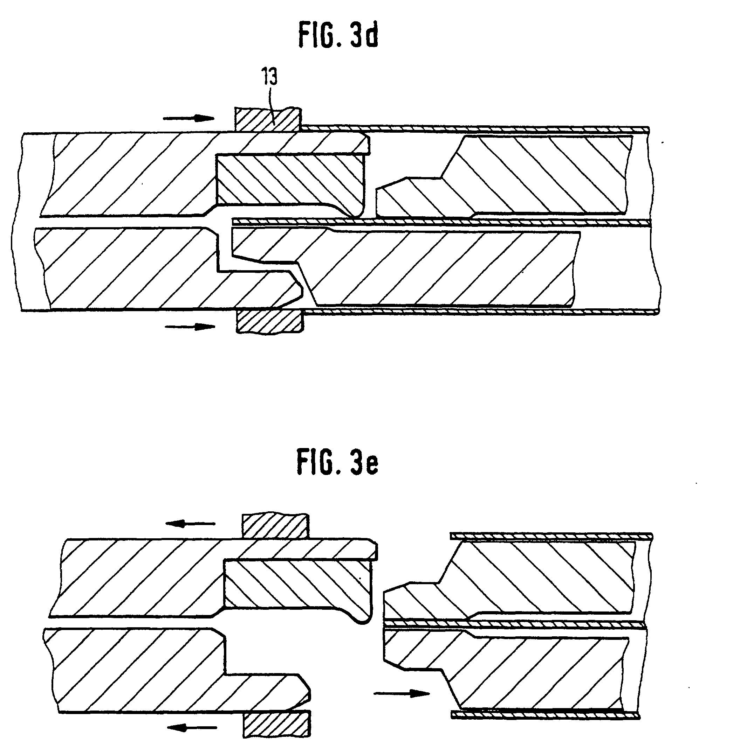

Die Übergabe erfolgt wie in Fig. 3 im Detail dargestellt. In Fig. 3a ist die Ausgangsposition dargestellt, in der ein Rohling 12 vom Hilfsdorn 6' auf den ihm in axialer Ausrichtung beabstandet gegenüberliegenden Preßdom 2' übergeben werden soll. Wie aus Fig. 3a besonders deutlich ersichtlich ist, ist der untere Hilfsdornteil 7' mit einer Aussparung 15 und der obere Hilfsdornteil 7" mit einem Einsatz 16 mit einer vorspringenden Nase 17 versehen. Einsatz 16 und Nase 17 können auch einstückig mit dem oberen Hilfsdornteil 7" ausgeführt sein. Beide Hilfsdornteile 7', 7" sind im Eingangsbereich des Spaltes 8 abgeschrägt und bilden einen sich verjüngenden "Einführungstrichter", um ein einfacheres Einführen einer Trennwand 9 (s. Station I) in den Spalt 8 zu gewährleisten. Vor der Übergabe des Rohlings 12 auf den Preßdorn 2' wird der untere Preßdornteil 2a in die Aussparung 15 des Hilfsdorns 6' ausgefahren bzw. zugestellt, wie dies aus Fig. 3b ersichtlich ist, d. h. sie werden miteinander gekoppelt. Die Aussparung 15 ist in ihrer Form dem vorderen Ende des Preßdornteils 2a angepaßt. Hierdurch wird eine exakt ausgerichtete gekoppelte Verbindung zwischen Hilfsdorn 6' und Preßdorn 2' gewährleistet.

Wie aus Fig. 3a ersichtlich ist, besteht der Trennspalt 14 im Preßdom 2' aus wenigstens zwei Abschnitten, einem vorderen engen Abschnitt 18 und einem hinteren breiteren Abschnitt 19. Die lichte Weite des vorderen engen Abschnitts 18 entspricht in etwa der Stärke der verwendeten Trennwand 9. Durch das Vorschieben des unteren Teils 2a des Preßdoms 2' (s. Fig. 3b) wird neben der Kopplung auch erreicht, daß die Einführung in den Trennspalt 14 erleichtert wird. Durch die Kopplung mit dem unteren Hilfsdornteil 7' und durch die durch die Verschiebung erzielten Vergrößerung des Einführungsspaltes (Aufhebung des engen Abschnitts 18) sowie durch die Führungsnase 17 ist ein sicheres störungsfreies Einführen der Trennwand 9 des Rohlings 12 in den Trennspalt 14 des Preßdorns 2 gewährleistet (s. Fig. 3c).

Durch Aufschieben des Rohlings 12 mittels der Aufschiebvorrichtung 13 auf den Preßdorn 2 erfolgt die Übergabe. Um ein vollständiges Aufschieben des Rohlings 12 auf den Preßdom 2 zu gewährleisten, kann die Aufschiebvorrichtung 13 entsprechend ausfahrbar gestaltet sein. Es ist aber auch möglich, den Aufschiebvorgang durch die Aufschiebvorrichtung 13 in der in Fig. 3d gezeigten Stellung zu beenden und dann den Rohling 12 (den Rohrkörper 11) am unteren Preßdornteil 2a festzuhalten, z. B. durch Vakuum zu beaufschlagen, wodurch er sicher gehalten wird, um ihn dann mit dem Rückzug des Preßdomteils 2a in seine Endposition in die in Fig. 3e gezeigte Stellung zu überführen.

An einer benachbarten oder auf mehrere Stationen auf dem Drehtisch 1 verteilt wird nach Schwenkung des Preßdorns 2' mit dem Rohling 12 in eine axiale Position zu einer Matrize 3 und dessen Einführen in die Matrize 3 ein Tubenkopf angeformt, wobei in weiteren getakteten Stellungen eine Abkühlung und/oder ein Nachpressen vorgesehen sein kann. Weiter ist an einer Station ein Rückzug und dann eine Verschwenkung des Preßdorns 2 aus der senkrechten wieder in eine waagerechte Position vorgesehen, wobei an dieser Station auch die fertige Zweikammertube vom Preßdom 2 abgezogen werden kann. Sofern weitere Vorgänge, z. B. das Aufschrauben oder Aufprellen einer Verschlußkappe vorgesehen sind, kann hierfür auch eine Station am Drehtisch 3 vorgesehen sein. Einzelne Schritte können gegebenenfalls auch auf mehrere Stationen aufgeteilt sein.

Im Ausführungsbeispiel wird eine Nabe 5 mit vier rechtwinkelig zueinander angeordneten in einer waagerechten Ebene drehbaren Hilfsdornen 6 und ein Drehtisch 1 mit acht am Umfang gleichmäßig verteilten Preßdomen 2 verwendet, wobei auch jede beliebige andere Anzahl vorgesehen sein kann, es muß lediglich sichergestellt werden, daß der Takt der Nabe 5 und des Drehtisches 1 eine axiale Ausrichtung eines mit einem Rohling 12 bestückten Hilfsdorns 6' mit einem leeren Preßdorn 2 gewährleisten muß.

Statt eines Drehtisches 1 mit verschwenkbaren Preßdornen 2 können auch Transportmittel z. B. Ketten oder Sternränder vorgesehen sein, auf denen die Preßdorne nur axial verschiebbar jedoch nicht schwenkbar angeordnet den einzelnen Übergabe- bzw. Bearbeitungsstationen zuführbar sind.

## Patentansprüche

1. Verfahren zur Herstellung einer Zweikammertube mit einer in den Tubenkopf reichender Trennwand (9) und einem vorgefertigten Tubenrohrkörper (11) und einem Tubenkopf, der durch Zudosieren einer geschmolzenen Portion eines Kunststoffmaterials in eine Matrize (3), Einführen eines Preßdorns (2) in die Matrize (3) und Verpressen der Materialportion zwischen Preßdorn (2) und Matrize (3) unter gleichzeitiger Herstellung einer festen Verbindung mit dem Rohrkörper (11) als auch mit dem im Tubenkopfbereich angeordneten Abschnitt der Trennwand (9) hergestellt wird, Öffnen der Preßform, Herausführen des Preßdorns (2) und Abziehen der fertigen Zweikammertube,
**dadurch gekennzeichnet,**
**daß** die Trennwand (9) in einen Spalt (8) eines Hilfsdorns (6) eingeführt und ein Rohling (12) durch Aufschieben eines vorgefertigten Tubenrohrkörpers (11) auf den mit der Trennwand bestückten Hilfsdorn (6) hergestellt wird, der dann axial auf den Preßdorn (2) überführt wird.

2. Verfahren nach Anspruch 1, **dadurch gekennzeichnet, daß** nach dem Aufschieben des Rohrkörpers (11) auf den mit einer Trennwand (9) bestückten Hilfsdorn (6) die Längskanten bzw. Flügel (10) der Trennwand (9) mit dem Rohrkörper (11) fest verbunden werden.

3. Verfahren nach Anspruch 2, **dadurch gekennzeichnet, daß** das feste Verbinden durch Verschweißen entlang der gesamten Kontaktlänge des Rohrkörpers (11) mit den Längskanten bzw. Flügeln (10) erfolgt.

4. Verfahren nach Anspruch 2 oder 3, **dadurch gekennzeichnet, daß** vor dem Öffnen der aus Matrize (3) und Preßdorn (2) bestehenden Preßform ein einoder mehrmaliges Nachpressen des angeformten Tubenkopfes erfolgt.

5. Verfahren nach Anspruch 4, **dadurch gekennzeichnet, daß** jedem Nachpreßvorgang ein Kühlvorgang nachgeschaltet ist.

6. Vorrichtung zur Durchführung des Verfahrens nach einem der Ansprüche 1 bis 5, mit Matrizen (3), die die Außenform eines Tubenkopfes wiedergibt, und zustellbaren Preßdomen (2) mit einem Abschnitt für die innenform eines Tubenkopfes, einem Spender (4) zur Abgabe einer Materialportion eines geschmolzenen Kunststoffs in eine Matrize (3) für einen Tubenkopf, einer Vorrichtung zur Überführung des Preßdorns (2) in die Matrize (3) zum Anformen eines Tubenkopfes sowie einer Abziehvorrichtung für eine fertige Tube,
**dadurch gekennzeichnet,**
**daß** mindestens ein Hilfsdorn (6) mit einem Spalt (8) zur Aufnahme einer Trennwand (9), eine Beladevorrichtung zur Zu- und Einführung einer vorgefertigten Trennwand (9) in den Spalt (8) des Hilfsdorns (6), eine Beschickungsvorrichtung zum Zuführen und Aufschieben eines vorgefertigten Tubenrohrkörpers (11) auf den mit der Trennwand (9) beladenen Hilfsdorn zur Erzeugung eines Rohlings (12) und eine Übergabevorrichtung (13) zur axialen Übergabe des Rohlings (12) vom Hilfsdorn (6) auf den Preßdorn (2) vorgesehen sind.

7. Vorrichtung nach Anspruch 6, **dadurch gekennzeichnet, daß** mehrere Hilfsdorne (6) auf einer schrittweise drehbaren Nabe (5) in gleichen Abständen voneinander angeordnet sind.

8. Vorrichtung nach Anspruch 6 und 7, **dadurch gekennzeichnet, daß** jeder Preßdom (2) aus zwei längsgeteilten Preßdomteilen (2a, 2b) besteht, von denen einer axial verschiebbar angeordnet ist.

9. Vorrichtung nach einem der Ansprüche 6 bis 8, **dadurch gekennzeichnet, daß** jeder Hilfsdorn (6) eine zur Kopplung mit einem Preßdornteil (2a) dienende entsprechend angepaßte Aussparung (15) aufweist.

10. Vorrichtung nach einem der Ansprüche 6 bis 9, **dadurch gekennzeichnet, daß** jeder Hilfsdorn (6) mit einer Führungsnase (17) versehen ist.

## Claims

1. A method for producing a two-chamber tube having a divider (9) extending into the tube head and a prefabricated tubular body (11) of a tube and a tube head, which is produced by metering a melted portion of a plastic material into a die (3), introduction of a press mandrel (2) into the die (3) and pressing the material portion between press mandrel (2) and die (3) with the simultaneous production of a secure connection with the tubular body (11) and also with the portion of the divider (9) disposed in the tube head region, opening the pressing die, removal of the press mandrel (2) and removal of the prepared two-chamber tube,
**characterised in that** the divider (9) is introduced into a gap (8) in an auxiliary mandrel (6) and a blank (12) is produced by sliding a prefabricated tubular body (11) of a tube onto the auxiliary mandrel (6) fitted with the divider, which is then axially transferred onto the press mandrel (2).

2. A method according to Claim 1,
**characterised in that** after pushing the tubular body (11) onto the auxiliary mandrel (6) fitted with a divider (9), the longitudinal edges or wings (10) of the divider (9) are securely connected to the tubular body (11).

3. A method according to Claim 2,
**characterised in that** the secure connection is produced by welding along the entire contact length of the tubular body (11) with the longitudinal edges or wings (10).

4. A method according to Claim 2 or 3,
**characterised in that** before opening the pressing die consisting of die (3) and press mandrel (2), a subsequent pressing of the moulded tube head takes place once or several times.

5. A method according to Claim 4,
**characterised in that** a cooling operation follows each subsequent pressing operation.

6. A device for performing the method according to one of Claims 1 to 5, having dies (3) which reproduce the external shape of a tube head, and feedable press mandrels (2) having a portion for the inner shape of a tube head, a dispenser (4) for the delivery of a portion of material of a melted plastic into a die (3) for a tube head, a device for transferring the press mandrel (2) into the die (3) for moulding a tube head and also a take-off device for a prepared tube,
**characterised in that** at least one auxiliary mandrel (6) having a gap (8) for housing a divider (9), a charging device for supplying and introducing a prefabricated divider (9) into the gap (8) of the auxiliary mandrel (6), a loading device for supplying and sliding a prefabricated tubular body (11) of a tube onto the auxiliary mandrel charged with the divider (9) to produce a blank (12) and a transfer device (13) for the axial transfer of the blank (12) from the auxiliary mandrel (6) onto the press mandrel (2) are provided.

7. A device according to Claim 6,
**characterised in that** several auxiliary mandrels (6) are disposed equally spaced from each other on an intermittently rotatable hub (5).

8. A device according to Claim 6 or 7,
**characterised in that** each press mandrel (2) consists of two longitudinally divided press mandrel parts (2a, 2b), each of which is disposed with axial displaceability.

9. A device according to one of Claims 6 to 8,
**characterised in that** each auxiliary mandrel (6) comprises an appropriately adapted recess (15) that serves for coupling with a press mandrel part (2a).

10. A device according to one of Claims 6 to 9,
**characterised in that** each auxiliary mandrel (6) is provided with a guide lug (17).

## Revendications

1. Procédé de fabrication d'un tube à deux chambres comportant une paroi de séparation (9) atteignant la tête du tube, un corps tubulaire préfabriqué du tube (11) et une tête du tube, fabriqué par addition par dosage d'une partie fondue d'un matériau plastique dans une matrice (3), introduction d'un mandrin de compression (2) dans la matrice (3) et compression de la partie du matériau entre le mandrin de compression (2) et la matrice (3), avec établissement simultané d'une liaison ferme avec le corps tubulaire (11), la section de la paroi de séparation (9) étant agencée dans la région de la tête du tube, par ouverture du moule, sortie du mandrin de compression (2) et retrait du tube à deux chambres fini,
**caractérisé en ce que**
la paroi de séparation (9) est insérée dans une fente (8) d'un mandrin auxiliaire (6), une ébauche (12) étant produite en enfilant un corps tubulaire préfabriqué du tube (11) sur le mandrin auxiliaire (6) comportant la paroi de séparation, celle-ci étant ensuite transférée axialement sur le mandrin de compression (2).

2. Procédé selon la revendication 1, **caractérisé en ce qu'**après l'enfilage du corps tubulaire (11) sur le mandrin auxiliaire (6) comportant une paroi de séparation (9), les bords longitudinaux ou les ailes (10) de la paroi de séparation (9) sont fermement reliés au corps tubulaire (11).

3. Procédé selon la revendication 2, **caractérisé en ce que** la liaison ferme est assurée par soudage le long de l'ensemble de la longueur de contact du corps tubulaire (11) avec les bords longitudinaux ou les ailes (10).

4. Procédé selon les revendications 2 ou 3, **caractérisé en ce qu'**avant l'ouverture du moule de compression comportant la matrice (3) et le mandrin de compression (2), la tête du tube est soumise à une recompression ou à plusieurs recompressions.

5. Procédé selon la revendication 4, **caractérisé en ce que** chaque opération de recompression est suivie par une opération de refroidissement.

6. Dispositif servant à l'exécution du procédé selon l'une des revendications 1 à 5, comprenant des matrices (3) reproduisant la forme externe d'une tête de tube, et des mandrins de compression à déplacement (2) avec une section pour la forme interne d'une tête de tube, un distributeur (4) servant à transférer une partie du matériau d'un plastique fondu dans une matrice (3) pour une tête de tube, un dispositif de transfert du mandrin de compression (2) dans la matrice (3) pour former une tête de tube ainsi qu'un dispositif de retrait d'un tube fini,
**caractérisé en ce que**
il comporte au moins un mandrin auxiliaire (6) comportant une fente (8) destinée à recevoir une paroi de séparation (9), un dispositif de chargement pour amener une paroi de séparation préfabriquée (9) et l'insérer dans la fente (8) du mandrin auxiliaire (6), un dispositif d'alimentation servant à amener et à enfiler un corps tubulaire préfabriqué du tube (11) sur le mandrin auxiliaire chargé de la paroi de séparation (9), pour produire une ébauche (12), et un dispositif de transfert (13) pour le transfert axial de l'ébauche (12) du mandrin auxiliaire (6) vers le mandrin de compression (2).

7. Dispositif selon la revendication 6, **caractérisé en ce que** plusieurs mandrins auxiliaires (6) sont agencés à des espacements égaux sur un moyeu à rotation progressive (5).

8. Dispositif selon les revendications 6 et 7, **caractérisé en ce que** chaque mandrin de compression (2) comprend deux parties de mandrin de compression à subdivision longitudinale (2a, 2b), une partie étant agencée de sorte à permettre son déplacement axial.

9. Dispositif selon l'une des revendications 6 à 8, **caractérisé en ce que** chaque mandrin auxiliaire (6) comporte un évidement (15) approprié à l'accouplement avec une partie du mandrin de compression (2a).

10. Dispositif selon l'une des revendications 6 à 9, **caractérisé en ce que** chaque mandrin auxiliaire (6) comporte un nez de guidage (17).
